# EUROPÄISCHE PATENTSCHRIFT

(11) **EP 3 586 429 B1**
(45) Veröffentlichungstag und Bekanntmachung des Hinweises auf die Patenterteilung: **07.04.2021**
(21) Anmeldenummer: 18704399.7
(22) Anmeldetag: 07.02.2018
(51) Int. Cl.: H02K 5/10, H02K 5/26, H02K 7/116

(54) **ANTRIEB, UMFASSEND EIN ELEKTROMOTOR UND EIN GETRIEBE**
POWER UNIT COMPRISING AN ELECTRIC MOTOR AND A GEARBOX
MÉCANISME D'ENTRAÎNEMENT COMPORTANT UNE MOTEUR ÉLECTRIQUE ET UNE TRANSMISSION

(30) Priorität: 21.02.2017 DE 102017001645
(43) Veröffentlichungstag der Anmeldung: 01.01.2020
(73) Patentinhaber: SEW-EURODRIVE GmbH & Co. KG, 76646 Bruchsal (DE)
(72) Erfinder: DENEFLEH, Roland, 64683 Einhausen (DE); BÜHN, Oliver, 76703 Kraichtal (DE); UNTERBURG, Henning, 76227 Karlsruhe (DE); KERSCHBAUM, Martin, 76139 Karlsruhe (DE)
(86) Internationale Anmeldenummer: PCT/EP2018/025034
(87) Internationale Veröffentlichungsnummer: WO 2018/153547

(56) Entgegenhaltungen:
- CN-U- 201 742 210
- DE-B3-102015 009 091
- DE-U1- 29 700 290
- DE-U1-202006 010 188
- US-A1- 2015 349 606

## Beschreibung

Die Erfindung betrifft einen Antrieb, umfassend ein Elektromotor und ein Getriebe.

Es ist allgemein bekannt, dass ein elektromotorischer Antrieb einen Elektromotor und ein Getriebe aufweist.

**Aus der** DE 20 2006 014 231 U1 **ist ein elektromotorisches Küchengerät mit einem Bajonettverschluss für einen Elektromotor und eine Getriebestufe bekannt.**

**Aus der** DE 10 2012 202 049 A1 **ist eine elektrische Maschine bekannt.**

**Aus der** DE 203 04 998 U1 **ist ein Elektromotor mit einem Motorgehäuse und einem Zugangsteil bekannt.**

**Aus der** DE 103 19 187 A1 **ist eine elektrische Maschine mit Bajonettverbindung bekannt.**

**Aus der** US 2015/0349606 A1 **ist als nächstliegender Stand der Technik einen Getriebemotor bekannt.**

**Aus der** DE 10 2015 009 091 B3 **ist eine Anordnung zur Signal- und Leistungsübertragung bei einer aus wenigstens zwei Einheiten bestehenden Antriebseinrichtung bekannt.**

**Aus der** DE 20 2006 010188 U1 **ist ein Torantrieb bekannt.**

**Aus der** DE 297 00 290 U1 **ist ein kraftgetriebenes Handwerkzeug mit austauschbaren Aufsätzen bekannt.**

Der Erfindung liegt daher die Aufgabe zugrunde, einen Antrieb vereinfacht herstellbar weiterzubilden.

Erfindungsgemäß wird die Aufgabe bei dem Antrieb nach den in Anspruch 1 angegebenen Merkmalen gelöst.

Wichtige Merkmale der Erfindung bei dem Antrieb sind, dass der Antrieb ein Elektromotor und ein Getriebe umfasst,
wobei der Elektromotor eine Rotorwelle und ein Motorgehäuse aufweist, wobei die Rotorwelle mittels zumindest eines Lagers drehbar gelagert ist im Motorgehäuse,
wobei ein Adapterflansch mit dem Motorgehäuse drehfest verbunden ist
wobei das Gehäuse des Getriebes ein Gehäuseteil und ein Deckelteil aufweist, insbesondere welche miteinander verbunden sind,
wobei am Gehäuseteil ein Bajonettführungsbereich ausgebildet ist,
wobei der Adapterflansch einen Laschenbereich, insbesondere Bajonettnase, aufweist, insbesondere zum Hintergreifen des Bajonettführungsbereichs.

Von Vorteil ist dabei, dass Motor und Getriebe mittels Bajonettverbindung verbindbar sind. Somit ist ein einfaches Herstellen des Antriebs ermöglicht. Außerdem ist auch eine vereinfachte Wartung, insbesondere ein vereinfachtes Austauschen des Motors ermöglicht.

Des Weitere ist die Bajonettverbindung zur Zentrierung des Motors relativ zum Getriebe verwendbar.

Bei einer vorteilhaften Ausgestaltung sind Adapterflansch und Motorflansch einstückig, insbesondere einteilig, miteinander ausgebildet. Von Vorteil ist dabei, dass eine geringere Teilezahl notwendig ist und somit ein geringerer Lagerraum für die Herstellung benötigt wird.

Bei einer vorteilhaften Ausgestaltung ragt der Bajonettführungsbereich in eine Ausnehmung des Gehäuseteils hinein,
wobei der Bajonettführungsbereich einen Radialabstandsbereich überdeckt, welcher von dem von dem Laschenbereich überdeckten Radialabstandsbereich umfasst ist, insbesondere also radial weniger ausgedehnt ist als der Laschenbereich,
wobei der vom Bajonettführungsbereich überdeckte Umfangswinkelbereich kleiner ist als der von der Ausnehmung überdeckte Umfangswinkelbereich,
wobei der von dem Laschenbereich überdeckte Umfangswinkelbereich betragsmäßig kleiner ist als die Differenz des von der Ausnehmung überdeckten Umfangswinkelbereichs und dem von dem Bajonettführungsbereich überdeckten Umfangswinkelbereich,
insbesondere so, dass der Laschenbereich axial in die Ausnehmung einführbar ist und durch Verdrehen den Bajonettführungsbereich hintergreift. Von Vorteil ist dabei, dass der am Adapterflansch ausgeformte Laschenbereich axial einführbar ist in die Ausnehmung, wobei der vom Laschenbereich überdeckte Radialabstandsbereich den vom
Bajonettführungsbereich überdeckten Radialabstandsbereich umfasst. Nur weil in dem vom Bajonettführungsbereich überdeckten Radialabstandsbereich der Bajonettführungsbereich in Umfangsrichtung weniger ausgedehnt ist als die Ausnehmung ist der Laschenbereich in die Ausnehmung einführbar und kann somit mit seinem Hinterschnittsbereich den Bajonettführungsabschnitt hintergreifen, wenn der Laschenbereich in Umfangsrichtung gedreht wird. Somit umgreift der Laschenabschnitt den Bajonettführungsbereich, wobei er derart eng anliegt, dass er vom Bajonettführungsbereich beim Drehen in Umfangsrichtung axial verschoben wird. Dies wird mit einer entsprechenden Kontur des Bajonettführungsbereichs bewirkt.

Bei einer vorteilhaften Ausgestaltung nimmt die axiale Breite des Bajonettführungsbereichs in Umfangsrichtung zu,
insbesondere
- so, dass der am Adapterflansch ausgebildete Laschenbereich bei der Drehung in Umfangsrichtung vom Bajonettführungsbereich axial verschoben wird, insbesondere so, dass die axiale Position proportional zur Drehwinkelstellung des Laschenbereichs ist,
- und/oder so, dass der Adapterflansch beim zum Gehäuseteil relativen Verdrehen des Adapterflansches in Umfangsrichtung zum Gehäuseteil hingedrückt wird.

Von Vorteil ist dabei, dass mittels der zunehmenden Breite ein verbessertes, also engeres, Anliegen des Laschenbereichs am Bajonettführungsabschnitt erreichbar ist und somit eine Führung, insbesondere Verschiebung des Laschenbereichs in axialer Richtung, bewirkt ist.

Erfindungsgemäß ist die Ausnehmung in Umfangsrichtung begrenzt durch eine Halterippe, welche sich von einer Lageraufnahme des Lagers der eintreibenden Welle in radialer Richtung erstreckt.

Ferner ist die Ausnehmung entgegen der Umfangsrichtung begrenzt durch eine weitere Halterippe, welche sich von einer Lageraufnahme des Lagers der eintreibenden Welle in radialer Richtung erstreckt,
wobei der Bajonettführungsbereich die weitere Halterippe berührt, wobei Bajonettführungsbereich, weitere Halterippe und Lageraufnahme einstückig ausgebildet sind. Von Vorteil ist dabei, dass eine stabile Halterung der Lageraufnahme erreichbar ist. Somit ist die Lageraufnahme selbst sehr dünnwandig, insbesondere ringartig oder hohlzylindrisch, ausführbar. Die Halterippen erstrecken sich zu einem radial weiter außenliegenden Bereich des Gehäuseteils, so dass dieser radial weiter außenliegende Bereich rahmenartig ausgeführt ist und somit die Stabilität verbesserte ist. Der rahmenartige Bereich muss nicht rein rechteckförmig ausgeformt sein, sondern darf auch teilweise mit Material gefüllt sein, so dass die Stabilität weiter verbessert ist.

Bei einer vorteilhaften Ausgestaltung ist am Boden der topfförmig ausgeformten Lageraufnahme zwischen Lageraufnahme und dem darin aufgenommenen Lager eine elastisch verformte Dichtung angeordnet,
wobei am Boden der Lageraufnahme Stegbereiche axial hervorragen, an welchen das Lager anliegt, so dass die Verformung der Dichtung mittels der Stegbereiche begrenzt ist,
wobei die elastisch verformte Dichtung das Lager gegen eine an der eintreibenden Welle ausgeformte Stufe drückt,
insbesondere wobei die eintreibende Welle mittels des Lagers relativ zur Lageraufnahme drehbar gelagert ist. Von Vorteil ist dabei, dass die Dichtung einerseits das Lager gegen eine Stufe der Welle drückt und andererseits als Dichtung verwendbar ist. Dabei ist wichtig, dass das Andrücken mittels der Stegbereiche begrenzt ist und somit keine übergroßen Anpresskräfte erzeugbar sind.

Bei einer vorteilhaften Ausgestaltung weist das Deckelteil ebenfalls topfförmig ausgeformte Lageraufnahmen auf,
wobei Halterippen von der jeweiligen Lageraufnahme zu einem umlaufenden Randbereich des

Deckelteils sich erstrecken,
wobei am jeweiligen Boden der topfförmigen Lageraufnahme axial hervorragende Stegbereiche ausgeformt sind, welche die elastische Verformung einer jeweiligen Dichtung begrenzen,
insbesondere wobei die jeweilige Dichtung das jeweilige Lager auf eine jeweilige an der jeweiligen Welle ausgebildete Stufe drückt. Von Vorteil ist dabei, dass die Dichtung einerseits abdichtet und andererseits das Lager axial sichert und andrückt gegen eine Stufe der vom Lager gelagerten Welle.

Bei einer vorteilhaften Ausgestaltung ist in einer Ausnehmung des Gehäuseteils ein am Gehäuseteil abgestützter Bolzen angeordnet, welcher von einem Federelement insbesondere axial zum Adapterflansch gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung ist in einer Ausnehmung des Adapterflansches ein am Adapterflansch abgestützter Bolzen angeordnet, welcher von einem Federelement insbesondere axial zum Gehäuseteil gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung sind zum Gehäuseteil hin axial hervorragende Stegbereiche am Adapterflansch ausgeformt, welche jeweils in eine jeweilige Ringnut des Gehäuseteils hineinragen und somit als Führung bei der Verdrehbewegung des Adapterflansches relativ zum Gehäuseteil wirksam sind,
wobei der vom jeweiligen Stegbereich überdeckte Radialabstandsbereich unabhängig vom Umfangswinkel ist,
insbesondere wobei der jeweilige Stegbereich sich in Umfangsrichtung erstreckt,
insbesondere wobei die Stegbereiche zwar auf demselben Radialabstand angeordnet sind, aber voneinander in Umfangsrichtung beabstandet sind. Von Vorteil ist dabei, dass eine einfache Herstellung einer Zentrierung und Führung erreichbar ist. Insbesondere ist eine Ringnut verwendbar, in welche die Stegbereiche hineinragen und somit als Führung fungieren. Von Vorteil ist dabei, dass eine Führung und Zentrierung mittels der Stegbereiche in einfacher Weise erreichbar ist. Denn die Stegbereiche sind kreisabschnittweise am Adapterflansch ausgeformt und ragen teilweise in eine am Gehäuseteil ausgebildete Ringnut hinein, so dass eine Führung beim Betätigen der Bajonettverbindung bewirkt ist, also beim Verdrehen des Adapterflansches relativ zum Gehäuseteil.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

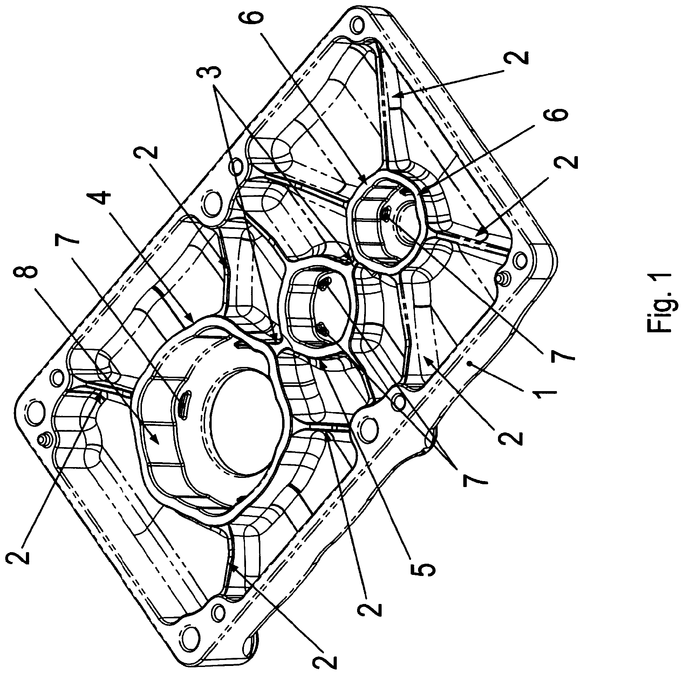

In der Figur 1 ist eine Schrägansicht eines Deckelteils 1 des erfindungsgemäßen Antriebs aus einer ersten Blickrichtung dargestellt.

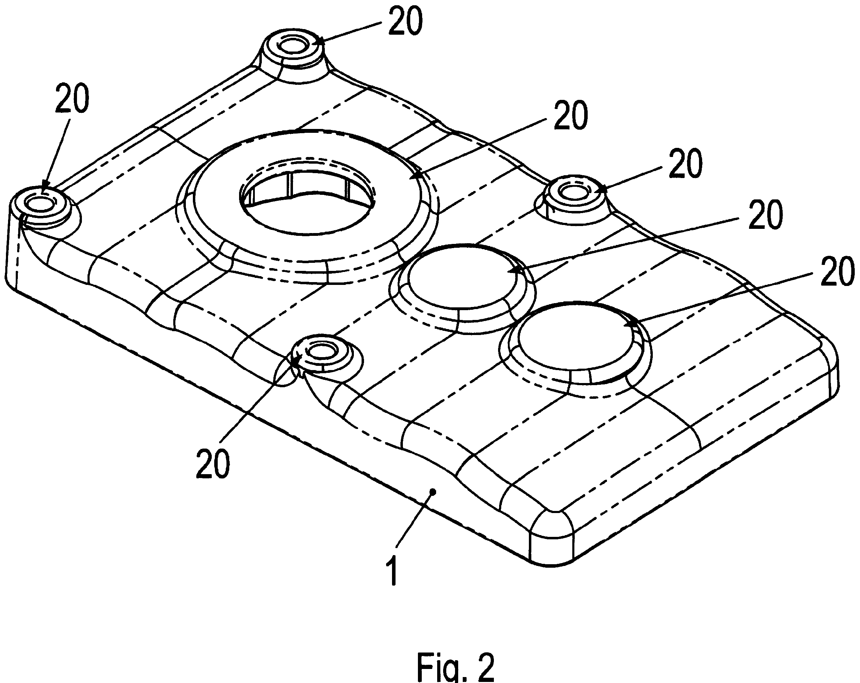

In der Figur 2 ist eine Schrägansicht des Deckelteils 1 aus einer anderen Blickrichtung dargestellt.
In der Figur 3 ist eine Seitenansicht des Deckelteils 1 dargestellt.

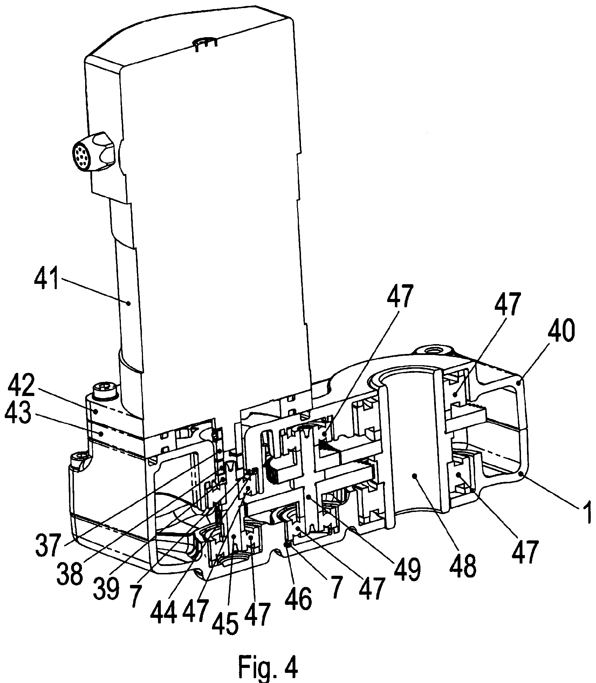

In der Figur 4 ist der Antrieb angeschnitten in Schrägansicht dargestellt.

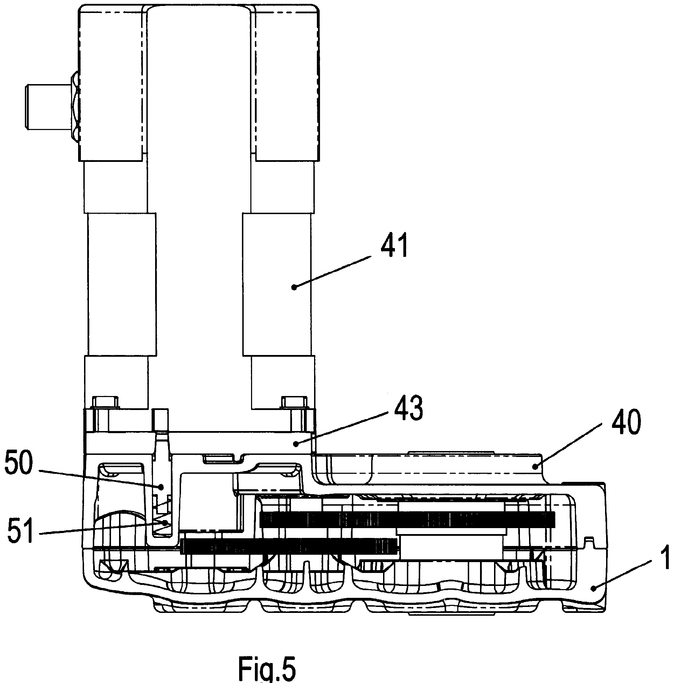

In der Figur 5 ist eine Schnittansicht des Antriebs dargestellt, wobei ein Bolzen 50 zur Arretierung sichtbar ist.
In der Figur 6 ist eine Schrägansicht eines Gehäuseteils 40 des Antriebs in Schrägansicht dargestellt.

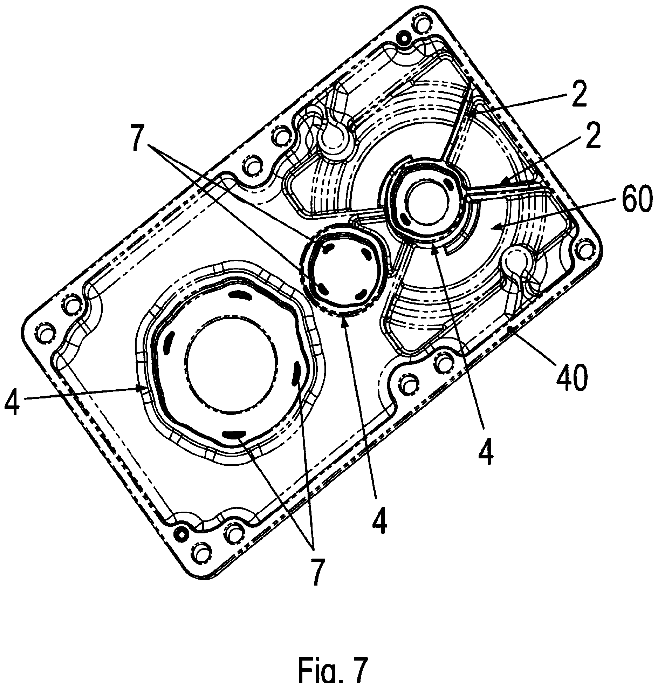

In der Figur 7 ist das Gehäuseteil 40 in einer Schrägansicht in einer anderen Blickrichtung gezeigt.

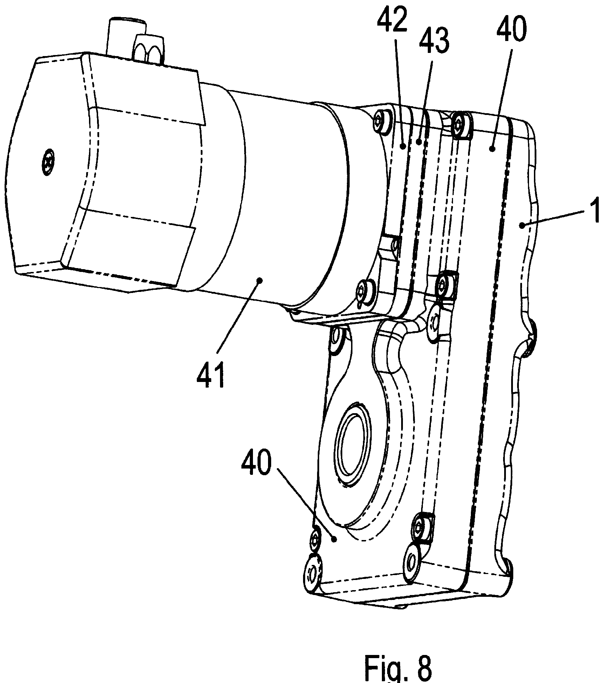

In der Figur 8 ist der Antrieb, aufweisend Getriebe und Elektromotor, in Schrägansicht gezeigt.

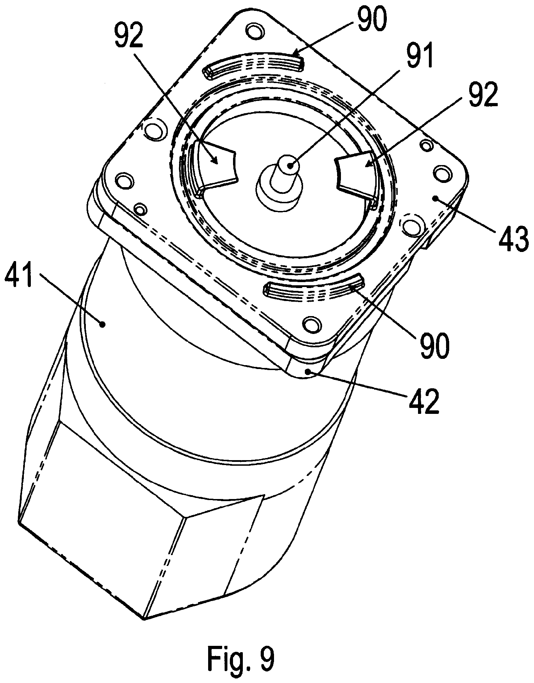

In der Figur 9 ist der Elektromotor des Antriebs in Schrägansicht dargestellt.

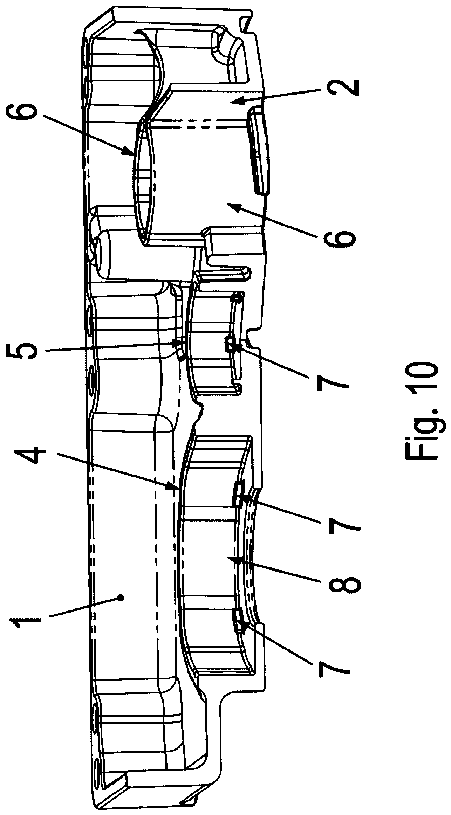

In der Figur 10 ist das Deckelteil 1 angeschnitten und in Schrägansicht dargestellt, wobei die Blickrichtung beinahe der Blickrichtung einer Seitenansicht entspricht.
Wie in Figur 8 dargestellt, weist der Antrieb ein von einem Elektromotor angetriebenes Getriebe auf.

Wie in den Figuren dargestellt, weist dabei der Elektromotor ein Gehäuseteil 41 auf, welches mit einem Motorflansch 42 verbunden ist, welches mit dem Adapterflansch 43 verbunden ist. Das Gehäuse des Getriebes weist ein Gehäuseteil 40 auf und ein mit dem Gehäuseteil 40 dicht verbundenes Deckelteil 1.

Der Adapterflansch 43 ist mit dem Gehäuseteil 40 verbunden, wobei hier eine Bajonettverbindung verwendet ist.

Im Motorgehäuse 41 ist der Stator des Elektromotors aufgenommen und Lager zur Lagerung einer Rotorwelle des Elektromotors. Die Rotorwelle ist mittels einer Kupplung mit der eintreibenden Welle 45 des Getriebes drehfest verbunden. Hierzu weist die Kupplung ein erstes Kupplungsteil 37 auf, welches Drehfest mit der Rotorwelle verbunden ist, ein Zwischenteil 38, welches vorzugsweise aus einem Kunststoff oder Elastomer gefertigt ist, und ein zweites Kupplungsteil 39, welches drehfest mit der eintreibenden Welle 45 verbunden ist.

Erstes Kupplungsteil 37 und zweites Kupplungsteil 39 sind vorzugsweise jeweils aus Metall ausbildbar, wobei das Zwischenteil 38 aus einem weniger harten Material ausbildbar sind.

Die Kupplung ist vorzugsweise nach Art einer Klauenkupplung aufgebaut. Daher ist in Umfangsrichtung zwischen den beiden Kupplungsteilen (37, 39) das Zwischenteil 38 angeordnet. Somit sind Drehmomentstöße abdämpfbar.

Mit der eintreibenden Welle ist ein erstes Zahnrad drehfest verbunden, das im Eingriff steht mit einem weiteren Zahnrad, das mit einer Zwischenwelle 49 drehfest verbunden ist. Ein drittes Zahnrad ist ebenfalls mit der Zwischenwelle 49 drehfest verbunden, welches im Eingriff ist mit einem mit der abtreibenden Welle 48 drehfest verbundenen Zahnrad.

Jede Welle ist über Lager 47 drehbar gelagert, welche jeweils entweder im Deckelteil 1 oder im Gehäuseteil 40 aufgenommen sind.

Zur Aufnahme des jeweiligen Lagers 47 ist am Gehäuseteil 40 beziehungsweise am Deckelteil 1 jeweils eine Lageraufnahme (4, 5, 6) ausgeformt. Die Wandung der jeweiligen Lageraufnahme (4, 5, 6) ist dünnwandig ausgeführt und umgibt das Lager in jeweiliger Umfangsrichtung vollständig. Die Lageraufnahme (4, 5, 6) überdeckt in axialer Richtung jeweils einen axialen Bereich, welcher den vom jeweils aufgenommenen Lager 47 in axialer Richtung überdeckten axialen Bereich umfasst.
Die Lageraufnahmen (4, 5, 6) sind jeweils einstückig, insbesondere einteilig, entweder am Gehäuseteil 40 oder am Deckelteil 1 ausgeformt.

An der Innenwandung der jeweiligen Lageraufnahme (4, 5, 6) mittels eines Formwerkzeugs ist ein zylindrischer Raumbereich bereitgestellt, in welchem das jeweilige Lager 47 aufgenommen ist und anliegt. In denjenigen Umfangswinkelbereichen, in welchen der von der Lageraufnahme (4, 5, 6) umfasste Bereich radial weiter ausgedehnt ist, ist die Berührfläche zwischen Lageraufnahme (4, 5, 6) und Lager 47 unterbrochen.

Zwischen Gehäuseteil 40 und jeweils in einer am Gehäuseteil 40 ausgeformten Lageraufnahme (4, 5, 6) ist eine Dichtung angeordnet, welche das Lager 47 gegen eine an der von diesem jeweiligen Lager 47 gelagerten Welle ausgebildete Stufe drückt. Hierzu wird die Dichtung elastisch verformt, wobei diese Verformung durch jeweilige Stegbereiche 7 begrenzt wird, welche am Gehäuseteil 40 ausgeformt sind.

Die Stegbereiche 7, welche am Gehäuseteil 40 ausgeformt sind und jeweils dasselbe Lager 47 berühren, sind auf gleichem Radialabstand zur Drehachse der von diesem Lager 47 gelagerten Welle angeordnet. In Umfangsrichtung sind die Stegbereiche 7 dieses jeweiligen Lagers 47 voneinander beabstandet, insbesondere regelmäßig.

Die Lageraufnahmen (4, 5, 6) kragen aus dem restlichen Gehäuseteil 40 beziehungsweise Deckelteil 1 axial hervor.

Dieses restliche Deckelteil 1 ist wannenförmig ausgeführt und weist dabei einen Bodenbereich auf, aus dem die Lageraufnahmen (4, 5, 6) hervorragen.

Am restlichen Deckelteil 1 ist ein äußerer, umlaufender Randbereich angeordnet, der einen axialen Bereich überdeckt, welcher auch von den Lageraufnahmen (4, 5, 6) überdeckt wird.

Vier, in Umfangsrichtung voneinander beabstandete Halterippen 2 erstrecken sich von diesem Randbereich bis zu der Lageraufnahme 4, welche für die Aufnahme des Lagers 47 der abtreibenden Welle 48 vorgesehen ist. Der Abstand der Halterippen 2 in Umfangsrichtung ist nicht regelmäßig. Somit sind Resonanzschwingungen reduzierbar.

Eine Verbindungsrippe 3 ist von den Halterippen 2 der Lageraufnahme 4, welche für die Aufnahme des Lagers 47 der Zwischenwelle 49 vorgesehen ist, beabstandet und erstreckt sich von der Lageraufnahme 4 zu der benachbarten Lageraufnahme 5.

Zwei weitere Halterippen 2 sind am Deckelteil 1 ausgeformt, welche sich von der Lageraufnahme 5 bis zum Randbereich des Deckelteils 1 erstrecken.

Die Lageraufnahme 6 des Lagers 47 der eintreibenden Welle 45 ist ebenfalls mittels vier Halterippen 2 stabilisiert, welche sich jeweils von der Lageraufnahme 6 zum Randbereich des Deckelteils 1 erstrecken und in Umfangsrichtung voneinander beabstandet sind.

Außerdem ist eine weitere Verbindungrippe 3 vorgesehen, welche sich von der Lageraufnahme 5 zur Lageraufnahme 6 erstreckt.

Zwischen dem jeweils aufgenommenen Lager 47 und dem Deckelteil 1, insbesondere dem Bodenbereich des Deckelteils 1, ist eine Dichtung angeordnet, welche in axialer Richtung auf das jeweilige Lager 47 drückt, so dass dieses an einer Stufe der jeweils durch das jeweilige Lager 47 gelagerten Welle angedrückt ist. Die elastische Verformung der Dichtung ist durch die am Deckelteil 1, insbesondere am Bodenbereich, ausgeformten Stegbereiche 7 begrenzt.

Somit ist das jeweilige Lager 47 mittels der jeweiligen Dichtung 46 angedrückt und abgedichtet.

Das Deckelteil 1 ist mit dem Gehäuseteil 40 schraubverbunden und mittels einer zwischengeordneten Dichtung abgedichtet, also dicht verbunden.

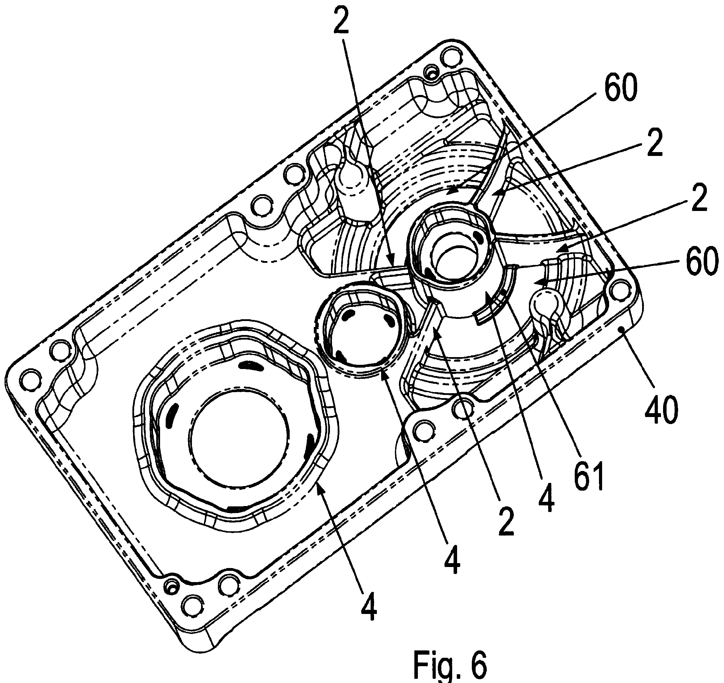

Wie in Figur 6 gezeigt, weist das Gehäuseteil 40 ebenfalls einen außen umlaufenden Randbereich auf. Für die eintreibende Welle 45 weist das Gehäuseteil 40 eine Lageraufnahme 4 auf, welche ein Lager der eintreibenden Welle 45 aufnimmt. Vier in Umfangsrichtung voneinander beabstandete Halterippen 2 erstrecken sich jeweils von dem Randbereich zur Lageraufnahme 4, insbesondere so dass diese stabilisiert ist, insbesondere gegen Schwingungen und/oder über die eintreibende Welle 45 eingeleitete Querkräfte.

Dieser Randbereich überdeckt einen axialen Bereich, welcher den vom im Gehäuseteil 40 aufgenommenen Lager der eintreibenden Welle 45 überdeckten axialen Bereich umfasst.

Der Bodenbereich des Gehäuseteils 40 weist eine erste und eine zweite Ausnehmung 60 auf, die zur Einführung von Laschenbereichen 92, insbesondere Bajonettnasen, vorgesehen sind.

In Umfangsrichtung ist die erste Ausnehmung 60 durch eine erste der Halterippen 2 begrenzt. Entgegen der Umfangsrichtung ist die zweite Ausnehmung 60 durch eine zweite der Halterippen 2 begrenzt.

Die andere Ausnehmung 60 ist durch die beiden anderen Halterippen 2 in Umfangsrichtung beziehungsweise entgegen der Umfangsrichtung begrenzt.

Von der Lagerausnehmung 4 ragt ein erster Bajonettführungsbereich 61 radial hervor, insbesondere in die Ausnehmung 60. Der erste Bajonettführungsbereich 61 erstreckt sich über einen geringeren Umfangswinkelbereich als die Ausnehmung 60 und ist radial weniger weit ausgedehnt als die Ausnehmung 60.

Von der Lagerausnehmung 4 ragt auch ein zweiter Bajonettführungsbereich 61 radial hervor, insbesondere in die andere Ausnehmung 60. Der zweite Bajonettführungsbereich 61 erstreckt sich ebenfalls über einen geringeren Umfangswinkelbereich als die zweite Ausnehmung 60 und ist radial ebenfalls weniger weit ausgedehnt als die zweite Ausnehmung 60.

Am Adapterflansch 43 ist eine mittig angeordnete Ausnehmung ausgeformt, wobei voneinander in Umfangsrichtung beabstandete Laschenbereiche 92 nach radial innen in die Ausnehmung hervorragen.

In Umfangsrichtung ist jeder der beiden Laschenbereiche 92 weniger ausgedehnt als die Differenz der Ausdehnung der Ausnehmung 60 in Umfangsrichtung und der Ausdehnung des Bajonettführungsbereichs 61.

Somit ist beim Ansetzen des Adapterflansches 43 an das Gehäuseteil 40 der jeweilige Laschenbereich 92 in den in Umfangsrichtung vorhandenen Freiraum zwischen der Begrenzung der Ausnehmung 60, also der ersten Halterippe 2, und dem Bajonettführungsbereich 61 einführbar und durch relatives Verdrehen des Adapterflansches als Hintergriff hinter den Bajonettführungsbereich 61 wirksam wird.

Der Bajonettführungsbereich weist eine in Umfangsrichtung zunehmende axiale Position auf, so dass beim relativen Verdrehen der Adapterflansch 43 immer näher oder stärker auf das Gehäuseteil 40 gedrückt wird. Die Verdrehbewegung ist begrenzt einerseits durch das Anliegen des Adapterflansches 43 an dem Gehäuseteil 40 und andererseits auch durch die zweite Halterippe 2, welche die Verdrehbewegung in Umfangsrichtung begrenzt.

Vorzugsweise nimmt die axiale Wandstärke des Bajonettführungsbereichs 61 in Umfangsrichtung zu, so dass der hintergreifende Laschenbereich 92 immer weiter in axiale Richtung verschoben wird und somit der Adapterflansch 43 an das Gehäuseteil 40 angedrückt wird.

Zur Arretierung ist ein Bolzen 50 in einem am Gehäuseteil 40 ausgeformten Sackloch geführt, welcher von einem Federelement 51, welches am Boden des Sacklochs abgestützt ist, zum Adapterflansch 43 hingedrückt wird.

Sobald bei der Verdrehbewegung eine im Adapterflansch 43 eingebrachte Ausnehmung in Flucht mit dem Sackloch des Gehäuseteils 40 kommt, wird daher der Bolzen 50 vom Federelement 51 in die Ausnehmung teilweise hineingedrückt. Somit ragt dann der axial ausgerichtete Bolzen 50 mit seinem aus dem Gehäuseteil 40 hervorragenden Bereich in die Ausnehmung des Adapterflansches 43 hinein, wodurch die Verdrehbewegung arretiert wird.

Am Adapterflansch 43 sind axial zum Gehäuseteil 40 hervorragende Stegbereiche 90 ausgeformt, welche in eine Ringnut des Gehäuseteils 40 hineinragen und somit als Führung bei der Verdrehbewegung wirksam sind. Der jeweilige Stegbereich 90 erstreckt sich in Umfangsrichtung, wobei die Stegbereiche zwar auf demselben Radialabstand angeordnet sind, aber voneinander in Umfangsrichtung beabstandet.

Jede der Wellen (45, 48, 49) ist über zwei Lager gelagert, wobei jedes der Lager von einer Dichtung (44, 46) axial beaufschlagt wird, so dass die Lager gegeneinander vorgespannt sind. Hierbei ist ein erstes der Lager einer ersten Welle der Wellen (45, 48, 49) im Deckelteil 1 und das andere Lager dieser ersten Welle im Gehäuseteil 40 aufgenommen. Die erste Dichtung ist im Deckelteil 1 aufgenommen und drückt gegen das erste Lager der ersten Welle. Die zweite Dichtung ist im Gehäuseteil 40 aufgenommen und drückt gegen das zweite Lager der ersten Welle. Somit wird das erste Lager von der ersten Dichtung gegen eine erste Stufe an der ersten Welle gedrückt und das zweite Lager von der zweiten Dichtung gegen eine zweite Stufe der ersten Welle gedrückt. Somit sind die Lager gegeneinander verspannt angeordnet. Die Dichtungen sind jeweils als O-Ring oder als Flachdichtung ausführbar.

Zur Herstellung präzise gefertigter Lagersitze für die aufgenommenen Lager aller Wellen des Getriebes wird nach dem Herstellen mittels Gießen ein Verformwerkzeug eingesetzt.

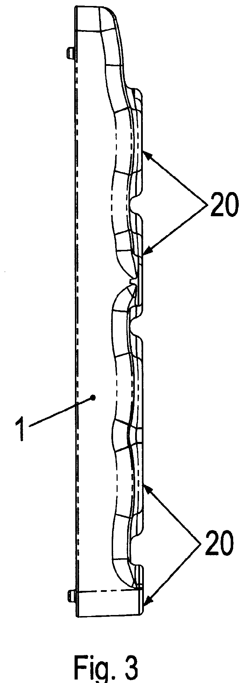

Das Deckelteil 1 wird also in einem ersten Herstellverfahrensschritt als Gussteil hergestellt. Danach wird das Deckelteil 1 mit seiner Außenseite, also mit der beim später hergestellten Antrieb vom Motor abgewandten Seite, auf eine ebene Fläche aufgelegt. Hierzu weist das Deckelteil 1, wie in Figur 3 dargestellt, plane, also ebene Auflageflächenbereiche 20 auf. Somit liegt das Deckelteil 1 stabil auf der ebenen Fläche, beispielsweise ein Arbeitstisch, auf. Danach wird als Formwerkzeug ein Stempel in jede der Lageraufnahmen eingepresst, wobei der Stempel zylindrisch geformt ist. Auf diese Weise werden die Lagersitze in den Lageraufnahmen auf Passungsmaß gebracht. Vorzugsweise werden die Stempel für die Lageraufnahmen synchron eingepresst. Somit ist die relative Lage und Ausrichtung der Lagersitze mit hoher Genauigkeit gewährleistbar. Ein Verkippen des Deckelteils 1 beim Einpressen des Stempelwerkzeugs ist somit verhindert.

Auf diese Weise sind also zylindrische Abschnitte 8 der Wandung der jeweiligen Lageraufnahme passgenau fertigbar. Allerdings sind diese Abschnitte nicht zusammenhängend gefertigt, sondern in Umfangsrichtung voneinander beabstandet. Somit wechseln die zylindrischen Abschnitte der Wandung der jeweiligen Lageraufnahme ab mit jeweils benachbarten Abschnitten, welche radial weiter ausgedehnt sind.

Das beschrieben Verfahren zur Fertigung passgenauer Lagersitze wird auch beim Gehäuseteil 40 ausgeführt. Hierzu weist dieses Gehäuseteil 40 auf der dem Motor zugewandten Seite ebene Flächenabschnitte auf, so dass es stabil auf einer ebenen Fläche auflegbar und die Stempelwerkzeuge zur passgenauen Herstellung der Lagersitze synchron in die Lageraufnahmen einpressbar sind. Ein Verkippen des Gehäuseteils 40 beim Einpressen des Stempelwerkzeugs ist somit verhindert. Somit sind die Lagersitze relativ zueinander hochgenau ausgerichtet und auch von ihrer jeweiligen Form her passgenau gefertigt.

Bei einem weiteren erfindungsgemäßen Ausführungsbeispiel sind Adapterflansch 43 und Motorflansch 42 einstückig, also einteilig, miteinander ausbildbar.

### Bezugszeichenliste

1 Deckelteil
2 Halterippe
3 Verbindungsrippe
4 Lageraufnahme
5 Lageraufnahme
6 Lageraufnahme
7 Stegbereich
8 zylindrischer Abschnitt der Wandung der Lageraufnahme 4
20 Auflageflächenbereich
37 erstes Kupplungsteil
38 Zwischenteil
39 zweites Kupplungsteil
40 Gehäuseteil
41 Motorgehäuse
42 Motorflansch
43 Adapterflansch
44 Dichtung
45 eintreibende Welle
46 Dichtung
47 Lager
48 abtreibende Welle
49 Zwischenwelle
50 Bolzen
51 Federelement
60 Ausnehmung für Bajonettnase
61 Bajonettführungsbereich
90 Stegbereich
91 Rotorwelle
92 Laschenbereich, insbesondere Bajonettnase

## Patentansprüche

1. Antrieb, umfassend einen Elektromotor und ein Getriebe,
wobei der Elektromotor eine Rotorwelle und ein Motorgehäuse (41) aufweist, wobei die Rotorwelle mittels zumindest eines Lagers (47) Motorgehäuse (41) drehbar gelagert ist,
wobei ein Adapterflansch (43) mit dem Motorgehäuse (41) drehfest verbunden ist,
wobei ein Gehäuse des Getriebes ein Gehäuseteil (40) und ein Deckelteil (1) aufweist, i welche miteinander verbunden sind,
**wobei** am Gehäuseteil (40) ein Bajonettführungsbereich (61) ausgebildet ist,
wobei der Adapterflansch (43) eine Bajonettnase (61) zum Hintergreifen des Bajonettführungsbereichs (61) aufweist,
**dadurch gekennzeichnet, dass**
eine **Ausnehmung** (60) des Gehäuseteils (40) **in Umfangsrichtung durch eine** Halterippe (2) begrenzt ist, **welche sich von einer Lageraufnahme** (4,5,6) **des Lagers** (47) **der eintreibenden Welle** (45) **in radialer Richtung erstreckt,**
**wobei die Ausnehmung** (60) des Gehäuseteils (40) **entgegen der Umfangsrichtung durch eine weitere** Halterippe (2) begrenzt ist, **welche sich von einer Lageraufnahme** (4,5,6) **des Lagers** (47) **der eintreibenden Welle** (45) **in radialer Richtung erstreckt,**
**wobei der Bajonettführungsbereich** (61) **die weitere Halterippe** (2) **berührt, wobei** der Bajonettführungsbereich (61), die **weitere Halterippe** (2) **und** die **Lageraufnahme** (4,5,6) einstückig ausgebildet **sind,**
wobei das Lager (47) an der Innenwandung der jeweiligen Lageraufnahme (4, 5, 6) anliegt und in denjenigen Umfangswinkelbereichen, in welchen der von der Lageraufnahme (4, 5, 6) umfasste Bereich radial weiter ausgedehnt ist, die Berührfläche zwischen Lageraufnahme (4, 5, 6) und Lager (47) unterbrochen ist.

2. Antrieb nach Anspruch 1,
**dadurch gekennzeichnet, dass**
Adapterflansch (43) und Motorflansch (42) einstückig, insbesondere einteilig, miteinander ausgebildet sind.

3. Antrieb nach mindestens einem der vorangegangenen Ansprüche,
**dadurch gekennzeichnet, dass**
der Bajonettführungsbereich (61) in die Ausnehmung (60) des Gehäuseteils (40) nineinragt,
wobei der Bajonettführungsbereich (61) einen Radialabstandsbereich überdeckt, welcher von dem von der Bajonettnase (92) überdeckten Radialabstandsbereich umfasst ist, insbesondere also radial weniger ausgedehnt ist als die Bajonettnase (92),
wobei der vom Bajonettführungsbereich (61) überdeckte Umfangswinkelbereich kleiner ist als der von der Ausnehmung überdeckte Umfangswinkelbereich,
wobei der von der Bajonettnase (92) überdeckte Umfangswinkelbereich betragsmäßig kleiner ist als die Differenz des von der Ausnehmung (60) überdeckten Umfangswinkelbereichs und dem von dem Bajonettführungsbereich (61) überdeckten Umfangswinkelbereich, insbesondere so, dass die Bajonettnase (92) axial in die Ausnehmung (60) sinführbar ist und durch Verdrehen den Bajonettführungsbereich (61) hintergreift.

4. Antrieb nach mindestens einem der vorangegangenen Ansprüche,
**dadurch gekennzeichnet, dass**
die axiale Breite des Bajonettführungsbereichs (61) n Umfangsrichtung zunimmt, insbesondere
- so, dass die am Adapterflansch (43) ausgebildete Bajonettnase (92) bei der Drehung in Umfangsrichtung vom Bajonettführungsbereich (61) axial verschoben wird, insbesondere so, dass die axiale Position proportional zur Drehwinkelstellung der Bajonettnase (92) ist,
- und/oder so, dass der Adapterflansch (43) beim zum Gehäuseteil (40) relativen Verdrehen des Adapterflansches (43) in Umfangsrichtung zum Gehäuseteil (40) ningedrückt wird.

5. Antrieb nach mindestens einem der vorangegangenen Ansprüche,
**dadurch gekennzeichnet, dass**
am Boden der topfförmig ausgeformten Lageraufnahme; (4,5,6) zwischen Lageraufnahme (4,5,6) und dem darin aufgenommenen Lager (47) eine elastisch verformte Dichtung (46) angeordnet ist,
wobei am Boden der Lageraufnahme (4,5,6) Stegbereiche (7) axial hervorragen, an welchen das Lager (47) anliegt, so dass die Verformung der Dichtung (46) mittels der Stegbereiche (7) pegrenzt ist,
wobei die elastisch verformte Dichtung (46) das Lager (47) gegen eine an der eintreibenden Welle (45) ausgeformte Stufe drückt,
insbesondere wobei die eintreibende Welle (45) mittels des Lagers (47) relativ zur Lageraufnahme (4,5,6)
drehbar gelagert ist.

6. Antrieb nach mindestens einem der vorangegangenen Ansprüche,
**dadurch gekennzeichnet, dass**
das Deckelteil (1) ebenfalls topfförmig ausgeformte Lageraufnahmen (4,5,6) aufweist,
wobei Halterippen (2) von der jeweiligen Lageraufnahme (4,5,6) zu einem umlaufenden Randbereich des Deckelteils (1) sich erstrecken,
wobei am jeweiligen Boden der topfförmigen Lageraufnahme (4,5,6) axial hervorragende Stegbereiche (7) ausgeformt sind, welche die elastische Verformung einer jeweiligen Dichtung (44,46) begrenzen,
insbesondere wobei die jeweilige Dichtung (44,46) das jeweilige Lager (47) auf eine jeweilige an der jeweiligen Welle (45,49) ausgebildete Stufe drückt.

7. Antrieb nach mindestens einem der vorangegangenen Ansprüche,
**dadurch gekennzeichnet, dass**
in einer Ausnehmung des Gehäuseteils (40) ein am Gehäuseteil (40) Z abgestützter Bolzen (50) angeordnet ist, welcher von einem Federelement (51) insbesondere axial zum Adapterflansch (43) gedrückt wird, insbesondere zur Arretierung,
oder dass
in einer Ausnehmung des Adapterflansches (43) ein am Adapterflansch (43) abgestützter Bolzen (50) angeordnet ist, welcher von einem Federelement (51) insbesondere axial zum Gehäuseteil (40) gedrückt wird, insbesondere zur Arretierung.

8. Antrieb nach mindestens einem der vorangegangenen Ansprüche,
**dadurch gekennzeichnet, dass**
zum Gehäuseteil (40) hin axial hervorragende Stegbereiche (90) am Adapterflansch (43) ausgeformt sind,
welche jeweils in eine jeweilige Ringnut des Gehäuseteils (40) nineinragen und somit als Führung bei der Verdrehbewegung des Adapterflansches (43) relativ zum Gehäuseteil (40) wirksam sind,
wobei der vom jeweiligen Stegbereich (90) überdeckte Radialabstandsbereich unabhängig vom Umfangswinkel ist,
insbesondere wobei der jeweilige Stegbereich (90) sich in Umfangsrichtung erstreckt,
insbesondere wobei die Stegbereiche (90) zwar auf demselben Radialabstand angeordnet sind, aber voneinander in Umfangsrichtung beabstandet sind.

## Claims

1. Drive comprising an electric motor and a gearing,
the electric motor having a rotor shaft and a motor casing (41), the rotor shaft being rotatably mounted in the motor casing (41) by means of at least one bearing (47),
an adapter flange (43) being connected to the motor casing (41) for conjoint rotation,
a casing of the gearing having a casing part (40) and a lid part (1), which are interconnected, a bayonet guide region (61) being formed on the casing part (40),
the adapter flange (43) having a bayonet lug (61) for engaging behind the bayonet guide region (61),
**characterised in that**
an opening (60) of the casing part (40) is delimited in the circumferential direction by a retaining rib (2), which extends in the radial direction from a bearing seat (4, 5, 6) of the bearing (47) of the input shaft (45),
the opening (60) of the casing part (40) being delimited in the opposite direction to the circumferential direction by a further retaining rib (2), which extends in the radial direction from a bearing seat (4, 5, 6) of the bearing (47) of the input shaft (45),
the bayonet guide region (61) being in contact with the further retaining rib (2), the bayonet guide region (61), the further retaining rib (2) and the bearing seat (4, 5, 6) being formed in one piece,
the bearing (47) abutting the inner wall of the relevant bearing seat (4, 5, 6), and the contact surface between the bearing seat (4, 5, 6) and the bearing (47) being discontinuous in the circumferential angular ranges in which the region encompassed by the bearing seat (4, 5, 6) has a greater radial extent.

2. Drive according to claim 1,
**characterised in that**
the adapter flange (43) and motor flange (42) are formed together in one piece, in particular as one part.

3. Drive according to at least one of the preceding claims,
**characterised in that**
the bayonet guide region (61) protrudes into the opening (60) of the casing part (40),
the bayonet guide region (61) covering a radial-distance region that is encompassed by the radial-distance region covered by the bayonet lug (92), in particular therefore having a lesser radial extent than the bayonet lug (92),
the circumferential angular range covered by the bayonet guide region (61) being smaller than the circumferential angular range covered by the opening,
the circumferential angular range covered by the bayonet lug (92) being smaller in terms of magnitude than the difference between the circumferential angular range covered by the opening (60) and the circumferential angular range covered by the bayonet guide region (61), in particular such that the bayonet lug (92) can be inserted axially into the opening (60) and engages behind the bayonet guide region (61) as a result of rotation.

4. Drive according to at least one of the preceding claims,
**characterised in that**
the axial width of the bayonet guide region (61) increases in the circumferential direction, in particular
- such that the bayonet lug (92) formed on the adapter flange (43) is axially displaced by the bayonet guide region (61) upon rotation in the circumferential direction, in particular such that the axial position is proportional to the rotational angle position of the bayonet lug (92),
- and/or such that, when the adapter flange (43) is rotated relative to the casing part (40), the adapter flange (43) is pushed in the circumferential direction towards the casing part (40).

5. Drive according to at least one of the preceding claims,
**characterised in that**
a resiliently deformed seal (46) is arranged at the bottom of the cup-shaped bearing seat (4, 5, 6) between the bearing seat (4, 5, 6) and the bearing (47) received therein,
ridge regions (7) projecting axially on the bottom of the bearing seat (4, 5, 6), the bearing (47) abutting said ridge regions such that the deformation of the seal (46) is limited by means of the ridge regions (7),
the resiliently deformed seal (46) pushing the bearing (47) against a step formed on the input shaft (45),
the input shaft (45) in particular being rotatably mounted relative to the bearing seat (4, 5, 6) by means of the bearing (47).

6. Drive according to at least one of the preceding claims,
**characterised in that**
the lid part (1) likewise has cup-shaped bearing seats (4, 5, 6),
retaining ribs (2) extending from each bearing seat (4, 5, 6) towards a circumferential edge region of the lid part (1),
axially protruding ridge regions (7) being formed on the bottom of each cup-shaped bearing seat (4, 5, 6) and limiting the resilient deformation of a respective seal (44, 46),
each seal (44, 46) in particular pushing the respective bearing (47) onto a respective step formed on the respective shaft (45, 49).

7. Drive according to at least one of the preceding claims,
**characterised in that**
a bolt (50) supported on the casing part (40) is arranged in an opening of the casing part (40) and is pushed in particular axially towards the adapter flange (43) by a spring element (51), in particular for the purpose of locking,
or **in that**
a bolt (50) supported on the adapter flange (43) is arranged in an opening of the adapter flange (43) and is pushed in particular axially towards the casing part (40) by a spring element (51), in particular for the purpose of locking.

8. Drive according to at least one of the preceding claims,
**characterised in that**
ridge regions (90) protruding axially towards the casing part (40) are formed on the adapter flange (43) and each protrude into respective annular grooves in the casing part (40) and thus act as a guide when the adapter flange (43) moves in rotation relative to the casing part (40),
the radial-distance region covered by each ridge region (90) being independent of the circumferential angle,
each ridge region (90) in particular extending in the circumferential direction,
the ridge regions (90) in particular being arranged at the same radial distance but being spaced apart from one another in the circumferential direction.

## Revendications

1. Mécanisme d'entraînement comprenant un moteur électrique et une transmission, le moteur électrique présentant un arbre de rotor et un boîtier de moteur (41), l'arbre de rotor étant supporté à rotation au moyen d'au moins un palier (47) dans le boîtier de moteur (41),
une bride d'adaptateur (43) étant connectée de manière solidaire en rotation au boîtier de moteur (41),
un boîtier de la transmission présentant une partie de boîtier (40) et une partie de couvercle (1), lesquelles sont connectées l'une à l'autre,
une région de guidage à baïonnette (61) étant réalisée au niveau de la partie de boîtier (40),
la bride d'adaptateur (43) présentant un ergot de baïonnette (61) pour venir en prise par l'arrière avec la région de guidage à baïonnette (61),
**caractérisé en ce**
**qu'**un évidement (60) de la partie de boîtier (40) est limité dans la direction périphérique par une nervure de retenue (2), laquelle s'étend depuis un logement de palier (4, 5, 6) du palier (47) de l'arbre d'entraînement (45) dans la direction radiale,
l'évidement (60) de la partie de boîtier (40) étant limité dans le sens opposé à la direction périphérique par une nervure de retenue supplémentaire (2) qui s'étend depuis un logement de palier (4, 5, 6) du palier (47) de l'arbre d'entraînement (45) dans la direction radiale,
la région de guidage à baïonnette (61) venant en contact avec la nervure de retenue supplémentaire (2), la région de guidage à baïonnette (61), la nervure de retenue supplémentaire (2) et le logement de palier (4, 5, 6) étant réalisés d'une seule pièce,
le palier (47) s'appliquant contre la paroi intérieure du logement de palier respectif (4, 5, 6) et, dans les régions angulaires périphériques dans lesquelles la région englobée par le logement de palier (4, 5, 6) est étendue davantage dans la direction radiale, la surface de contact entre le logement de palier (4, 5, 6) et le palier (47) étant interrompue.

2. Mécanisme d'entraînement selon la revendication 1,
**caractérisé en ce que** la bride d'adaptateur (43) et la bride de moteur (42) sont réalisées d'une seule pièce, en particulier monobloc l'une avec l'autre.

3. Mécanisme d'entraînement selon au moins l'une des revendications précédentes,
**caractérisé en ce que**
la région de guidage à baïonnette (61) pénètre dans l'évidement (60) de la partie de boîtier (40),
la région de guidage à baïonnette (61) recouvrant une région d'espacement radial qui est comprise par la région d'espacement radial recouverte par l'ergot de baïonnette (92), en particulier qui est donc moins étendue dans la direction radiale que l'ergot de baïonnette (92), la région angulaire périphérique recouverte par la région de guidage à baïonnette (61) étant plus petite que la région angulaire périphérique recouverte par l'évidement,
la région angulaire périphérique recouverte par l'ergot de baïonnette (92) étant considérablement plus petite que la différence entre la région angulaire périphérique recouverte par l'évidement (60) et la région angulaire périphérique recouverte par la région de guidage à baïonnette (61), en particulier de telle sorte que l'ergot de baïonnette (92) puisse être introduit dans l'évidement (60) et vienne en prise par l'arrière par rotation avec la région de guidage à baïonnette (61).

4. Mécanisme d'entraînement selon au moins l'une des revendications précédentes,
**caractérisé en ce que**
la largeur axiale de la région de guidage à baïonnette (61) augmente dans la direction périphérique,
notamment
- de telle sorte que l'ergot de baïonnette (92) réalisé au niveau de la bride d'adaptateur (43), lors de la rotation dans la direction périphérique, soit décalé axialement de la région de guidage à baïonnette (61), en particulier de telle sorte que la position axiale soit proportionnelle à la position angulaire de rotation de l'ergot de baïonnette (92),
- et/ou de telle sorte que la bride d'adaptateur (43), lors de la rotation relative de la bride d'adaptateur (43) dans la direction périphérique par rapport à la partie de boîtier (40), soit enfoncée vers la partie de boîtier (40).

5. Mécanisme d'entraînement selon au moins l'une des revendications précédentes,
**caractérisé en ce**
**qu'**un joint d'étanchéité déformé élastiquement (46) est disposé sur le fond du logement de palier réalisé en forme de pot (4, 5, 6) entre le logement de palier (4, 5, 6) et le palier (47) reçu dans celui-ci,
des régions de nervure (7), contre lesquelles s'applique le palier (47), faisant saillie axialement au niveau du fond du logement de palier (4, 5, 6), de telle sorte que la déformation du joint d'étanchéité (46) soit limitée par les régions de nervure (7),
le joint d'étanchéité déformé axialement (46) pressant le palier (47) contre un épaulement formé au niveau de l'arbre d'entraînement (45),
en particulier l'arbre d'entraînement (45) étant supporté à rotation au moyen du palier (47) par rapport au logement de palier (4, 5, 6).

6. Mécanisme d'entraînement selon au moins l'une des revendications précédentes,
**caractérisé en ce que**
la partie de couvercle (1) présente des logements de palier (4, 5, 6) également réalisés en forme de pot,
des nervures de retenue (2) s'étendant depuis chaque logement de palier (4, 5, 6) jusqu'à une région de bord périphérique de la partie de couvercle (1),
des régions de nervures saillant axialement (7) étant formées au niveau du fond respectif du logement de palier en forme de pot (4, 5, 6), lesquelles limitent la déformation élastique d'un joint d'étanchéité respectif (44, 46),
en particulier le joint d'étanchéité respectif (44, 46) pressant le palier respectif (47) contre un épaulement respectif réalisé sur un arbre respectif (45, 49) .

7. Mécanisme d'entraînement selon au moins l'une des revendications précédentes,
**caractérisé en ce que**
dans un évidement de la partie de boîtier (40) est disposé un boulon (50) supporté au niveau de la partie de boîtier (40), lequel est pressé par un élément de ressort (51), notamment axialement vers la bride d'adaptateur (43), en particulier en vue d'un blocage,
ou **en ce que**
dans un évidement de la bride d'adaptateur (43) est disposé un boulon (50) supporté au niveau de la bride d'adaptateur (43), lequel est pressé par un élément de ressort (51), notamment axialement vers la partie de boîtier (40), en particulier en vue d'un blocage.

8. Mécanisme d'entraînement selon au moins l'une des revendications précédentes,
**caractérisé en ce que**
des régions de nervure (90) faisant saillie axialement vers la partie de boîtier (40) sont formées sur la bride d'adaptateur (43),
lesquelles font saillie à chaque fois dans une rainure annulaire respective de la partie de boîtier (40) et agissent ainsi en tant que guide lors du mouvement de rotation de la bride d'adaptateur (43) par rapport à la partie de boîtier (40),
la région d'espacement radial recouverte par la région de nervure respective (90) étant indépendante de l'angle périphérique,
en particulier la région de nervure respective (90) s'étendant dans la direction périphérique,
en particulier les régions de nervure (90) étant certes disposées avec le même espacement radial, mais étant espacées les unes des autres dans la direction périphérique.
